# EUROPÄISCHE PATENTSCHRIFT

(11) **EP 3 480 930 B1**
(45) Veröffentlichungstag und Bekanntmachung des Hinweises auf die Patenterteilung: **31.03.2021**
(21) Anmeldenummer: 17199947.7
(22) Anmeldetag: 03.11.2017
(51) Int. Cl.: H02K 21/24, H02K 1/27, H02K 16/04

(54) **AXIALFLUSSMASCHINE**
AXIAL FLOW MACHINE
MACHINE À FLUX AXIAL

(43) Veröffentlichungstag der Anmeldung: 08.05.2019
(73) Patentinhaber: Miba Sinter Austria GmbH, 4663 Laakirchen (AT)
(72) Erfinder: Sandner, Christian, 4810 Gmunden (AT); Andessner, Dietmar, 4625 Offenhausen (AT); Kobler, Ralf, 4040 Linz (AT); Redl, Matthias, 3100 St. Pölten (AT); Naglstrasser, Markus, 4300 St. Valentin (AT)
(74) Vertreter: Jell, Friedrich

(56) Entgegenhaltungen:
- DE-A1-102010 009 486
- FR-A1- 3 027 468
- JP-A- 2008 278 648

## Beschreibung

Die Erfindung betrifft eine Axialflussmaschine mit einer formstabilen Baugruppe, mit einer Maschinenwelle, mit einem an der Maschinenwelle befestigten Rotor, der eine Rotornabe, kreisförmig um die Maschinenwelle angeordnete Permanentmagneten, einen Klebstoff und eine am Außenumfang des Rotors angeordnete und diesen geschossen umlaufende Abstützung aufweist, welche die Permanentmagneten mit einer radialen Spannkraft belastet, und mit beidseitig des Rotors angeordneten Statoren.

Um einen Rotor einer Axialflussmaschinen masse- und trägheitsarm auszuführen, ist es aus dem Stand der Technik bekannt (EP1203436A1), eine Art Speichenrad aus faserverstärktem Kunststoff zu schaffen, in welchem wechselweise magnetisierte Permanentmagneten formschlüssig eingebettet bzw. damit vergraben angeordnet sind. Der faserverstärkte Kunststoff bildet zusammen mit den Permanentmagneten eine formstabile Baugruppe am Rotor aus, welche über Flansche mit einer Maschinenwelle der Axialflussmaschine fest verbunden ist.

Die formstabile Einheit wird am Außenumfang von einer als Bandage ausgebildeten Abstützung geschlossen umfasst, welche auf die formstabile Baugruppe eine radiale Spannkraft ausübt, um zumindest den Fliehkräften standzuhalten.

Nachteilig bedarf es für die Formschlüssigkeit der Baugruppe vergleichsweise breiter Abmessungen am Speichenrad - was den Größenanteil der Permanentmagneten am Rotor und damit die Motorleistung der Axialflussmaschine beschränkt. Der Einsatz von Seltenerdmagneten - beispielsweise kostenintensiven Neodym-Eisen-Bor Permanentmagneten - zum Ausgleich einer reduzierten Motorleistung ist daher unumgänglich, was folglich unter anderem die Herstellungskosten der Axialflussmaschine erhöht Dokument DE102010009486A1 offenbart einen Rotor einer Axialflussmaschine, bei dem alle Teile mit einer speziellen Elektropaste eingegossen und verbunden sind und wobei wobei zumindest ein Teil der axialen Formstabilität durch eine Trägerscheibe erzeugt wird.

Die Erfindung hat sich daher die Aufgabe gestellt, eine Axialflussmaschine der eingangs geschilderten Art derart konstruktiv zu verändern, dass trotz hoher Motorleistung und Standfestigkeit eine kostengünstige Herstellung möglich ist.

Die Erfindung löst die gestellte Aufgabe durch die Merkmale des Anspruchs 1.

Sitzen die Permanentmagneten auf der Rotornabe über mit Klebstoff versehene erste Klebefugen auf und schließen die Permanentmagneten über mit Klebstoff versehene zweite Klebefugen aneinander an, kann auf eine die Permanentmagneten einfassende formschlüssige Verbindung verzichtet werden - womit ein besonders kompakt ausgeführter Rotor mit hohem magnetischen Volumenanteil geschaffen wird.
Trotz Vermeidung einer formschlüssigen Verbindung muss jedoch nicht mit keiner verminderten mechanischen Belastungsfähigkeit des Rotors gerechnet werden, da erfindungsgemäß die Permanentmagneten, die Rotornabe, die Abstützung und der Klebstoff die formstabile Baugruppe ausbilden, deren radiale und axiale Formstabilität sich im Wesentlichen durch die radiale Spannkraft der Abstützung auf die Permanentmagneten bestimmt. Die stoffschlüssige Verbindung des Klebstoffs kann sohin mechanisch entlastet werden, was die Gefahr eines Adhäsions- oder Kohäsionsversagen am Klebstoff verringert. Die am Außenumfang des Rotors angeordnete Abstützung entlastet nämlich die Klebstoffverbindung beispielsweise gegenüber einer Scherung, welche sich aufgrund magnetischer Kraft zum rotierenden Drehfeld des Stators zwischen den Permanentmagneten ausbildet. Auch kann diese Abstützung ein breiteres Temperaturfenster am Rotor eröffnen, da durch die radiale und axiale Formstabilität des Rotors der Klebstoff am Fließen behindert wird. Der erfindungsgemäße Rotor kann daher trotz einfachem konstruktiven Aufbau - standfest - eine besonders hohe Motorleistung zur Verfügung stellen.

Der Konstruktionsaufwand des Rotors kann weiter verringert werden, wenn eine Bandage oder ein aufgeschrumpfter Stützring die Abstützung ausbildet. Vorzugsweise wird eine Bandage verwendet, um den Rotor besonders masse- und trägheitsarm auszuführen.

Die Verbindung zwischen Rotor und Maschinenwelle kann verbessert werden, wenn die Rotornabe im Querschnitt ein polygonales Außenprofil mit Seitenkanten aufweist, auf denen die Permanentmagneten über die mit Klebstoff gefüllte erste Klebefuge aufsitzen. Hierbei ist vorstellbar, dass mehrere Permanentmagneten auf einer gemeinsamen Seitenkante aufsitzen.

Sitzen auf je einer Seitenkante ein Permanentmagnet über je eine mit Klebstoff gefüllte Klebefuge auf, können hohe Drehmomente übertragen werden - womit die Standfestigkeit der Axialflussmaschine weiter erhöhbar ist.

Ein vergleichsweise kostengünstiger Rotor kann geschaffen werden, wenn die Permanentmagneten aus einem Ferritmaterial bestehen.

Eine vergleichsweise hohe Motorleistung kann ermöglicht werden, wenn Seltenerdmagneten die Permanentmagneten ausbilden.

Weist der Rotor mehrere Abdeckungen aus einem weichmagnetischen Pulververbundwerkstoff auf, die auf Breitseiten der Permanentmagneten vorgesehen sind, können Wirbelstromverluste am Roter reduziert werden - insbesondere, wenn Seltenerdmagneten die Permanentmagneten ausbilden.

Ist der Klebstoff weichelastisch, kann dieser unterschiedliche Wärmedehnungen aufnehmen und derart thermische Spannungen an den Permanentmagneten verhindern. Auf diese Weise sind auch deren Bruchgefahr reduzier- und die Standfestigkeit der Axialflussmaschine weiter erhöhbar. Insbesondere kann sich hierzu ein Silikonklebstoff als weichelastischer Klebstoff auszeichnen.

Eine besonders formstabile Baugruppe kann geschaffen werden, wenn der Klebstoff ein Epoxidharz-Klebstoff ist. Zudem kann damit eine steifere Baugruppe geschaffen werden, deren Resonanzfrequenz in unkritische Bereiche des Rotors verschoben die Standfestigkeit der Axialflussmaschine weiter erhöhen kann. Vorzugsweise weist der Epoxidharz-Klebstoff ein Zweikomponentensystem auf Basis Epoxid-Harz und Härter. Bevorzugt weist dieser Epoxidharz-Klebstoff ein Polymerisationskondensat aus Bisphenol A und Epichlorhydrin auf, um einen hohen E-Modul an der stoffschlüssigen Verbindung gewährleisten zu können.

Vorzugsweise weisen die Klebefugen ein maximales Spaltmaß von 0,5 mm auf. Insbesondere kann sich ein Spaltmaß von 0,3 mm bis 0,5 mm als vorteilhaft erweisen, um ausgleichend auf Maßungenauigkeiten der Permanentmagneten zu wirken, dennoch aber eine standfeste Klebstoffverbindung zu garantieren.

Die Konstruktion der Axialflussmaschine kann weiter vereinfacht werden, wenn die Permanentmagneten und die mit Klebstoff gefüllten zweiten Klebefugen eine zylinderförmige Umfangsfläche am Rotor ausbilden, an der die Abstützung anordnet ist. Zudem kann dies ein Vorsehen der Abstützung erleichtern.

Ist die zylinderförmige Umfangsfläche des Rotors spanend rundbearbeitet, insbesondere geschliffen, kann dies einen Bruch der Abstützung beispielsweise durch eine Magnetkantenpressung auf sicherer Weise vermeiden. Die Standfestigkeit der Axialflussmaschine kann dadurch weiter erhöht werden, insbesondere wenn die Abstützung als Bandage ausgeführt ist.

In den Figuren ist beispielsweise der Erfindungsgegenstand anhand einer Ausführungsvariante näher dargestellt. Es zeigen
- Fig. 1: eine aufgerissene Seitenansicht auf eine teilweise dargestellte Axialflussmaschine und
- Fig. 2: eine Schnittansicht nach II-II der Fig. 1.

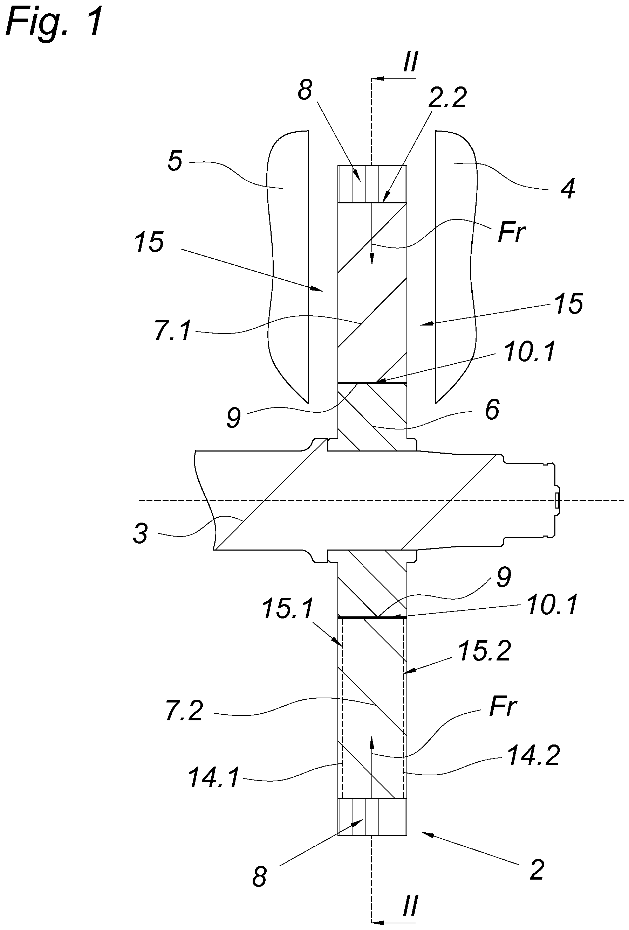

Die nach Fig. 1 beispielsweise dargestellte Axialflussmaschine 1 weist einen Rotor 2, eine Maschinenwelle 3 und zwei beidseitig des Rotors 2 angeordnete Statoren 4, 5 auf. Der Rotor 2 ist an der Maschinenwelle 3 befestigt - und zwar über dessen an der Maschinenwelle 3 kraftschlüssig aufsitzenden Rotornabe 6. Dem Rotor 2 sind zudem Permanentmagneten 7.1, 7.2 zugeordnet, welche kreisförmig um die Maschinenwelle 3 angeordnet sind.

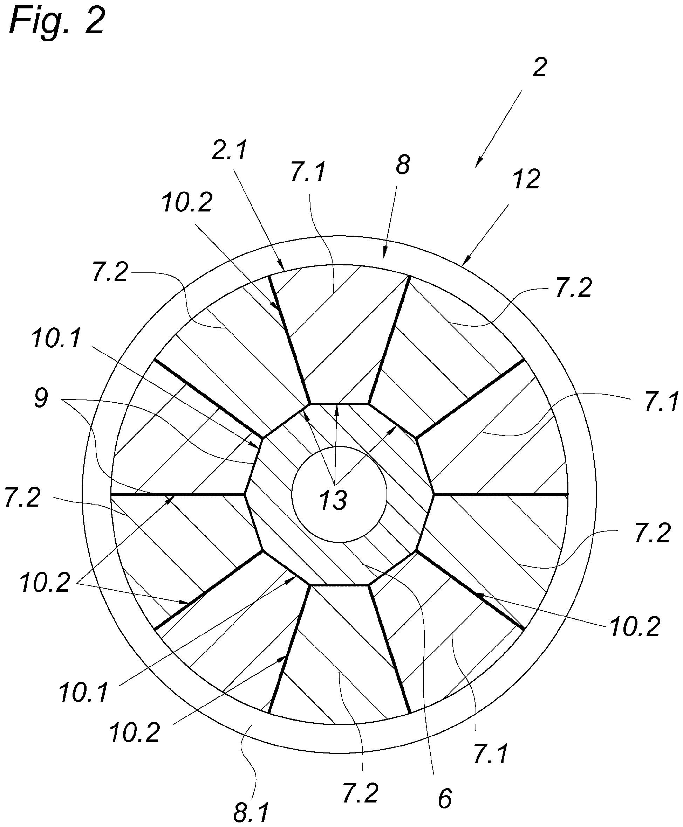

Die Permanentmagneten 7.1, 7.2 sind wechselweise magnetisiert - dies, indem, beispielsweise zwei, benachbarte Permanentmagnete eine umgekehrte Magnetisierungsrichtung aufweisen, was anhand einer unterschiedlichen Schraffur nach Fig. 2 dargestellt ist. Die Magnetisierungsrichtungen der Permanentmagneten 7.1, 7.2 verlaufen parallel zur Längsachse der Maschinenwelle 3.

Zudem weist der Rotor 2 eine am Außenumfang 2.1 des Rotors 2 angeordnete und diesen geschossen umlaufende Abstützung 8 auf. Diese als Bandage 8.1 ausgeführte Abstützung 8 besteht aus einem vorimprägnierte Fasermaterial, vorzugsweise Glasfasern etc., welche in Umfangsrichtung 2.3 gewickelt wurden. Vorstellbar ist auch, dass das Fasermaterial nach dem Wickeln imprägniert wird. Die Abstützung 8 belastet die Permanentmagneten 7.1, 7.2 mit einer radial nach innen gerichteten Spannkraft Fr und wirkt entgegen der Fliehkraft. Die Abstützung 8 kann beispielsweise als aufschrumpfbarer Stützring sein, was nicht dargestellt worden ist.

Erfindungsgemäß sitzen die Permanentmagneten 7.1, 7.2 auf der Rotornabe 6 über erste Klebefugen 10.1 auf und schließen über zweite Klebefugen 10.2 aneinander an - in den ersten und zweiten Klebefugen 10.1, 10.2 ist hierzu der Klebstoff 9 versehen. Der Rotor 2 besteht daher in einem kreisringförmigen Umfangsbereich im Wesentlichen aus den Permanentmagneten 7.1, 7.2. Dies stellt ein maximiertes Magnetvolumen zu Verfügung, um eine besonders hohe Motorleistung zu erreichen. Die mechanische Stabilität des Rotors 2 wird dabei allerdings nicht beeinträchtigt, weil die Permanentmagneten 7.1, 7.2, die Rotornabe 6, die Abstützung 8 und der Klebstoff 9 eine formstabile Baugruppe 12 ausbilden.
Dies ist gewährleistet, indem sich die radiale und axiale Formstabilität der Baugruppe 12 im Wesentlichen durch die radiale Spannkraft Fr der Abstützung 8 auf die Permanentmagneten 7.1, 7.2 bestimmt. Da die Abstützung 8 die Permanentmagneten 7.1, 7.2 mit der Rotornabe 6 verspannt, verliert auch die Festigkeit der stoffschlüssigen Verbindung des Klebstoffs 9 an Bedeutung, sodass dieser im Wesentlichen eher eine die Permanentmagneten 7.1, 7.2 beabstandete Funktion erfüllen kann - etwa, um diese vor Verspannung und damit vor Bruch zu schützen.
Die Druckvorspannung der Abstützung 8 kann von den Permanentmagneten 7.1, 7.2 ohne Weiteres aufgenommen werden. Die Spannkraft Fr ist höher als die Fliehkraft auf die Permanentmagneten 7.1, 7.2. Damit wird sichergestellt, dass die zulässige Zugspannung der Permanentmagneten 7.1, 7.2 nicht überschritten wird bzw. diese nicht abheben.
Die erfindungsgemäß konstruierte Axialflussmaschine 1 zeichnet sich daher nicht nur durch eine besonders hohe Motorleistung, sondern auch durch hohe Standfestigkeit aus.

Dies insbesondere auch dadurch, weil der Klebstoff 9 auch hochfest ist - insbesondere weil dieser als Epoxidharz-Klebstoff ausgeführt ist. Zudem kann solch eine Klebstoffverbindung vorteilhaft die Resonanzfrequenz des Rotors in unkritische Bereiche verschieben, was die Standfestigkeit der Axialflussmaschine weiter erhöhen kann. Besonders kann sich hierbei ein Epoxidharz-Klebstoff 9 auszeichnen, beispielsweise ein Polymerisationskondensat aus Bisphenol A und Epichlorhydrin unter Zugabe eines Härter, beispielsweise vom Typ EPH 161.

Die ersten und zweiten Klebefugen 10.1, 10.2 weisen ein Spaltmaß von 0,3 mm bis 0,5 mm auf, wodurch eine standfeste Abstützung der Permanentmagneten 7.1, 7.2 auf der Rotornabe 6 gewährleistet wird.

Durch diese kompakte Bauweise des Rotors 2 bietet sich auch an, die Permanentmagneten aus einem Ferritmaterial auszubilden. Dies reduziert die Kosten des Rotors 2 erheblich - womit eine kostengünstig aufgebaute Axialflussmaschine 1 ermöglicht wird.

Die Rotornabe 6 weist im Querschnitt ein polygonales Außenprofil mit Seitenkanten 13 auf - wie in der Fig. 2 erkennbar. Auf je einer Seitenkante 13 sitzt ein Permanentmagnet 7.1, 7.2 mit je einer ersten Klebefuge 10.1 auf, welche ersten Klebefugen 10.1 mit Klebstoff 9 gefüllt sind. Damit wir eine hohe Verdrehfestigkeit der Permanentmagneten 7.1, 7.2 gegenüber der Rotornabe 6 erreicht.

Zudem weist der Rotor 2 mehrere weichmagnetische Abdeckungen 14.1, 14.2 auf, welche auf Breitseiten 15.1, 15.2 der Permanentmagneten 7.1, 7.2 vorgesehen sind und aus einem weichmagnetischen Pulververbundwerkstoff bestehen. Diese weichmagnetischen Abdeckungen 14.1, 14.2 vergrößern zwar den Luftspalt 15 zwischen den Permanentmagneten 7.1, 7.2 und den jeweiligen Statoren 4, 5, dennoch können dadurch vorteilhaft Wirbelstromeffekte ausgeschossen werden - vor allem auch, wenn die Permanentmagneten 7.1, 7.2 als Seltenerdmagneten ausgebildet sind.

Wie in den Fig. 2 zu erkennen, bilden die Permanentmagneten 7.1, 7.2 und die mit Klebstoff 9 gefüllten zweiten Klebefugen 10.2 eine zylinderförmige Umfangsfläche 2.2 am Rotor 2 aus, an der die Abstützung 8 anordnet ist. Konstruktiv einfach gelöst, weisen die Permanentmagneten 7.1, 7.2 im Wesentlichen eine gleichschenkelige Trapezform auf, wobei die länger Grundseite eine Kreisbogenform aufweist.

Die zylinderförmige Umfangsfläche 2.2 des Rotors 2 ist zudem spanend rundbearbeitet, insbesondere geschliffen, nämlich feingeschliffen, um die singuläre mechanische Belastungen auf die Abstützung 8 ausschließen zu können. Hohe Standfestigkeit selbst bei hohen Drehzahlen ist derart mit der erfindungsgemäßen Axialflussmaschine 1 erreichbar.

## Patentansprüche

1. Axialflussmaschine mit einer formstabilen Baugruppe (12), mit einer Maschinenwelle (3), mit einem an der Maschinenwelle (3) befestigten Rotor (2), der eine Rotornabe (6), kreisförmig um die Maschinenwelle (3) angeordnete Permanentmagneten (7.1, 7.2), einen Klebstoff (9) und eine am Außenumfang (2.1) des Rotors (2) angeordnete und diesen geschlossen umlaufende Abstützung (8) aufweist, welche die Permanentmagneten (7.1, 7.2) mit einer radial nach innen gerichteten Spannkraft (Fr) belastet, und mit beidseitig des Rotors (2) angeordneten Statoren (4, 5) wobei die Permanentmagneten (7.1, 7.2) auf der Rotornabe (6) über mit dem Klebstoff (9) versehene erste Klebefugen (10.1) aufsitzen und über mit dem Klebstoff (9) versehene zweite Klebefugen (10.2) aneinander anschließen, wobei die Permanentmagneten (7.1, 7.2), die Rotornabe (6), die Abstützung und der Klebstoff (9) die formstabile Baugruppe (12) ausbilden, **dadurch gekennzeichnet, dass** die radiale und axiale Formstabilität der formstabilen Baugruppe (12) sich im Wesentlichen durch die radiale Spannkraft (Fr) der Abstützung (8) auf die Permanentmagneten (7.1, 7.2) bestimmt.

2. Axialflussmaschine nach Anspruch 1, **dadurch gekennzeichnet, dass** eine Bandage (8.1) oder ein aufgeschrumpfter Stützring die Abstützung (8) ausbildet.

3. Axialflussmaschine nach Anspruch 1 oder 2, **dadurch gekennzeichnet, dass** die Rotornabe (6) im Querschnitt ein polygonales Außenprofil mit Seitenkanten (13) aufweist, auf denen die Permanentmagneten (7.1, 7.2) über die mit dem Klebstoff (9) gefüllte erste Klebefuge (10.1) aufsitzen.

4. Axialflussmaschine nach Anspruch 3, **dadurch gekennzeichnet, dass** auf je einer Seitenkante ein Permanentmagnet (7.1, 7.2) über je eine mit dem Klebstoff (9) gefüllte erste Klebefuge (10.1) aufsitzt.

5. Axialflussmaschine nach einem der Ansprüche 1 bis 4, **dadurch gekennzeichnet, dass** die Permanentmagneten (7.1, 7.2) aus einem Ferritmaterial bestehen.

6. Axialflussmaschine nach einem der Ansprüche 1 bis 5, **dadurch gekennzeichnet, dass** Seltenerdmagneten die Permanentmagneten (7.1, 7.2) ausbilden.

7. Axialflussmaschine nach einem der Ansprüche 1 bis 6, **dadurch gekennzeichnet, dass** der Rotor (2) mehrere Abdeckungen (15.1, 15.2) aus einem weichmagnetischen Pulververbundwerkstoff aufweist, die auf Breitseiten (15.1, 15.2) der Permanentmagneten (7.1, 7.2) vorgesehen sind.

8. Axialflussmaschine nach einem der Ansprüche 1 bis 7, **dadurch gekennzeichnet, dass** der Klebstoff (9) ein Epoxidharz-Klebstoff, insbesondere ein Polymerisationskondensat aus Bisphenol A und Epichlorhydrin, ist.

9. Axialflussmaschine nach einem der Ansprüche 1 bis 8, **dadurch gekennzeichnet, dass** die ersten und zweiten Klebefugen (10.1, 10.2) ein maximales Spaltmaß von 0,5 mm, insbesondere ein Spaltmaß von 0,3 mm bis 0,5 mm aufweist.

10. Axialflussmaschine nach einem der Ansprüche 1 bis 9, **dadurch gekennzeichnet, dass** die Permanentmagneten (7.1, 7.2) und die mit dem Klebstoff (9) gefüllten zweiten Klebefugen (10.2) eine zylinderförmige Umfangsfläche (2.2) am Rotor (2) ausbilden, an der die Abstützung (8) anordnet ist.

11. Axialflussmaschine nach Anspruch 10, **dadurch gekennzeichnet, dass** die zylinderförmige Umfangsfläche (2.2) des Rotors (2) spanend rundbearbeitet, insbesondere geschliffen, ist.

## Claims

1. Axial-flow machine having a dimensionally stable assembly (12), having a machine shaft (3), having a rotor (2) fastened on the machine shaft (3) and provided with a rotor hub (6), permanent magnets (7.1, 7.2) disposed circularly around the machine shaft (3), an adhesive (9) and a bracing means (8), which is disposed on the outer circumference (2.1) of the rotor (2) and encircles it in shot manner and which urges the permanent magnets (7.1, 7.2) with a radially inwardly directed tension force (Fr), and having stators (4, 5) disposed on both sides of the rotor (2), wherein the permanent magnets (7.1, 7.2) are seated on the rotor hub (6) via first adhesive joints (10.1) equipped with the adhesive (9) and adjoin one another via second adhesive joints (10.2) equipped with adhesive (9), wherein the permanent magnets (7.1, 7.2), the rotor hub (6), the bracing means and the adhesive (9) form the dimensionally stable assembly (12), **characterized in that** the radial and axial dimensional stability of the stable assembly (12) is determined substantially by the radial tension force (Fr) of the bracing means (8) on the permanent magnets (7.1, 7.2).

2. Axial-flow machine according to claim 1, **characterized in that** a bandage (8.1) or a shrink-fitted bracing ring forms the bracing means (8).

3. Axial-flow machine according to claim 1 or 2, **characterized in that** the rotor hub (6) has, in cross section, a polygonal outer profile having side edges (13), on which the permanent magnets (7.1, 7.2) are seated via the first adhesive joint (10.1) filled with adhesive (9).

4. Axial-flow machine according to claim 3, **characterized in that** a permanent magnet (7.1, 7.2) is seated on each side edge via a first adhesive joint (10.1) each filled with adhesive (9).

5. Axial-flow machine according to one of claims 1 to 4, **characterized in that** the permanent magnets (7.1, 7.2) consist of a ferrite material.

6. Axial-flow machine according to one of claims 1 to 5, **characterized in that** rare earth magnets form the permanent magnets (7.1, 7.2).

7. Axial-flow machine according to one of claims 1 to 6, **characterized in that** the rotor (2) has several covers (15.1, 15.2) of a soft-magnetic powder-composite material, which are provided on broad sides (15.1, 15.2) of the permanent magnets (7.1, 7.2).

8. Axial-flow machine according to one of claims 1 to 7, **characterized in that** the adhesive (9) is an epoxy-resin adhesive, more particularly a condensation polymer of bisphenol A and epichlorohydrin.

9. Axial-flow machine according to one of claims 1 to 8, **characterized in that** the first and second adhesive joints has a maximum gap size 0.5 mm, more particularly a gap size of 0.3 mm to 0.5 mm.

10. Axial-flow machine according to one of claims 1 to 9, **characterized in that** the permanent magnets (7.1, 7.2) and the second adhesive joints (10.2) filled with the adhesive (9) form, on the rotor (2), a cylindrical circumferential face (2.2), on which the bracing means (8)is disposed.

11. Axial-flow machine according to claim 10, **characterized in that** the cylindrical circumferential face (2.2) of the rotor (2) is cylindrically machined by material removal, more particularly is ground.

## Revendications

1. Machine à flux axial avec un sous-ensemble de forme stable (12), avec un arbre de machine (3), avec un rotor (2) fixé à l'arbre de machine (3) qui présente un moyeu de rotor (6), des aimants permanents (7.1, 7.2) disposés en cercle autour de l'arbre de machine (3), un adhésif (9) et un support (8) disposé sur la circonférence extérieure (2.1) du rotor (2) et faisant le tour fermé de celle-ci, qui exerce sur les aimants permanents (7.1, 7.2) une force de serrage (Fr) dirigée vers l'intérieur dans le sens radial, et avec des stators (4, 5) disposés de part et d'autre du rotor (2), dans laquelle les aimants permanents (7.1, 7.2) sont posés sur le moyeu de rotor (6) par l'intermédiaire de premiers joints collés (10.1) munis de l'adhésif (9) et se raccordent les uns aux autres par l'intermédiaire de deuxièmes joints collés (10.2) munis de l'adhésif (9), dans laquelle les aimants permanents (7.1, 7.2), le moyeu de rotor (6), le support et l'adhésif (9) forment le sous-ensemble de forme stable (12), **caractérisée en ce que** la stabilité de forme radiale et axiale du sous-ensemble de forme stable (12) est déterminée pour l'essentiel par la force de serrage radiale (Fr) exercée par le support (8) sur les aimants permanents (7.1, 7.2).

2. Machine à flux axial selon la revendication 1, **caractérisée en ce que** le support (8) est formé par un cerclage (8.1) ou une bague de support frettée.

3. Machine à flux axial selon la revendication 1 ou 2, **caractérisée en ce que** le moyeu de rotor (6) présente en coupe transversale un profil extérieur polygonal avec des côtés (13) sur lesquels les aimants permanents (7.1, 7.2) sont posés par l'intermédiaire du premier joint collé (10.1) rempli de l'adhésif (9).

4. Machine à flux axial selon la revendication 3, **caractérisée en ce qu'**un aimant permanent (7.1, 7.2) est posé sur chaque côté par l'intermédiaire d'un premier joint collé (10.1) rempli de l'adhésif (9).

5. Machine à flux axial selon l'une des revendications 1 à 4, **caractérisée en ce que** les aimants permanents (7.1, 7.2) sont faits d'un matériau à base de ferrite.

6. Machine à flux axial selon l'une des revendications 1 à 5, **caractérisée en ce que** les aimants permanents (7.1, 7.2) sont formés d'aimants à base de terres rares.

7. Machine à flux axial selon l'une des revendications 1 à 6, **caractérisée en ce que** le rotor (2) présente plusieurs couvertures (15.1, 15.2) faites d'un matériau composite magnétique doux en poudre, qui est prévu sur les grands côtés (15.1, 15.2) des aimants permanents (7.1, 7.2).

8. Machine à flux axial selon l'une des revendications 1 à 7, **caractérisée en ce que** l'adhésif (9) est un adhésif à base de résine époxy, en particulier un polymère de condensation composé de bisphénol A et d'épichlorhydrine.

9. Machine à flux axial selon l'une des revendications 1 à 8, **caractérisée en ce que** les premiers et deuxièmes joints collés (10.1, 10.2) présentent une largeur de joint maximale de 0,5 mm, en particulier une largeur de joint de 0,3 mm à 0,5 mm.

10. Machine à flux axial selon l'une des revendications 1 à 9, **caractérisée en ce que** les aimants permanents (7.1, 7.2) et les deuxièmes joints collés (10.2) remplis de l'adhésif (9) forment sur le rotor (2) une surface de circonférence cylindrique (2.2) sur laquelle le support (8) est disposé.

11. Machine à flux axial selon la revendication 10, **caractérisée en ce que** la surface de circonférence cylindrique (2.2) du rotor (2) est travaillée en rond par enlèvement de matière, en particulier meulée.
